# EUROPÄISCHE PATENTANMELDUNG

(11) **EP 0 947 788 A1**
(43) Veröffentlichungstag der Anmeldung: **06.10.1999**
(21) Anmeldenummer: 98109037.6
(22) Anmeldetag: 18.05.1998
(51) Int. Cl.: F25J 3/04, F25J 5/00, B01D 53/04

(54) **Verfahren und Vorrichtung zur Tieftemperaturzerlegung von Luft**

(30) Priorität: 20.02.1998 DE 19807225
(71) Anmelder: Linde Aktiengesellschaft, 65189 Wiesbaden (DE)
(72) Erfinder: Rohde, Wilhelm, 81476 München (DE)
(74) Vertreter: Zahn, Christoph

(57) **Zusammenfassung**

Es werden ein Verfahren zur Tieftemperaturzerlegung von Luft, bei dem in mindestens einem umschaltbaren Regeneratorenpaar ein Teilstrom oder der gesamte zu zerlegende Luftstrom durch Wärmetausch mit einem Teil der Zerlegungsprodukte gekühlt wird, wobei Verunreinigungen auskondensieren, wonach der so gereinigte Luftstrom der Tieftemperaturzerlegung zugeführt wird, sowie eine Vorrichtung zum Durchführen des Verfahrens mit mindestens einem umschaltbaren Regeneratorenpaar, bei der die Lufteintrittsleitung mit den Regeneratoren verbunden ist, beschrieben.
Erfindungsgemäß erfolgt die Abtrennung von Wasser aus dem durch das Regeneratorenpaar geführten Luftstrom vor dem Auskondensieren der Verunreinigungen adsorptiv und der Wärmetausch des durch die Regeneratoren geführten Luftstromes erfolgt ausschließlich gegen einen unreinen Stickstoffstrom aus der Tieftemperaturzerlegung.
Derjenige Teilstrom der zu zerlegende Luft, der nicht den Regeneratoren zugeführt wird, wird adsorptiv von Verunreinigungen befreit und anschließend im indirekten Wärmetausch mit wenigstens einem anzuwärmenden Zerlegungsprodukt abgekühlt. Vorzugsweise werden wenigstens 50 bis 85 % der der Tieftemperaturzerlegung zugeführten Luftmenge durch die Regeneratoren geführt.

## Beschreibung

Die Erfindung betrifft ein Verfahren zur Tieftemperaturzerlegung von Luft, bei dem in mindestens einem umschaltbaren Regeneratorenpaar ein Teilstrom oder der gesamte zu zerlegende Luftstrom durch Wärmetausch mit einem Teil der Zerlegungsprodukte gekühlt wird, wobei Verunreinigungen auskondensieren, wonach der so gereinigte Luftstrom der Tieftemperaturzerlegung zugeführt wird.

Ferner betrifft die Erfindung eine Vorrichtung zum Durchführen des erfindungsgemäßen Verfahrens.

Bei der kryogenen Luftzerlegung - im folgenden Tieftemperaturzerlegung genannt - wird die Luft nach der Verdichtung zunächst auf annähernd Kühlwassertemperatur und dann bis auf ca. 15°C abgekühlt, anschließend adsorptiv getrocknet und von Kohlendioxid befreit - vorzugsweise mittels eines Molsiebes - und sodann in Plattenwärmetauschern gegen ausströmende Produkte und Restgas(e) auf Verflüssigungstemperatur abgekühlt. Die hierzu verwendeten Plattenwärmetauscher können jedoch nur bis zu einer bestimmten Größe gefertigt werden; bei entsprechend großen Luftmengen sind daher mehrere Wärmetauscher parallel zu schalten.

Bereits in den Anfängen der kryogenen Luftzerlegung, als die Sauerstoffproduktion einer Anlage etwa bei 2000 Nm³/h bis 6000 Nm³/h lag - was in der damaligen Zeit als Großanlage bezeichnet wurde -, kamen für den Wärmetausch zwischen Luft und Zerlegungsprodukte sog. Regeneratoren zum Einsatz. Diese waren vorzugsweise jeweils paarweise angeordnet. In einem Regenerator kühlt sich die Luft an der Wärmespeichermasse des Regenerators ab, wobei die störenden und zu entfernenden Bestandteile, wie Wasser und Kohlendioxid, flüssig bzw. fest ausgeschieden werden. Die Speichermasse des Regenerators wärmt sich dabei langsam an.

In dem zweiten Regenerator des Regeneratorenpaares werden die Zerlegungsprodukte aus der kryogenen Luftzerlegung angewärmt und tragen dabei die vorher ausgeschiedenen Verunreinigungen der Luft wieder aus dem Regenerator heraus. Dabei geben die Zerlegungsprodukte ihre Kälte an die Speichermasse des Regenerators ab. In periodischen Abständen werden die Regeneratoren umgeschaltet, so daß die Luft durch den zuvor mit Zerlegungsprodukten gekühlten Regenerator einströmt und die Zerlegungsprodukte durch den vorher mit Zerlegungsluft betriebenen Regenerator ausströmen. Hierbei ist anzumerken, daß die Produkte bei derartigen Luftzerlegungsanlagen vorwiegend Sauerstoff mit unterschiedlicher Reinheit und unreiner Stickstoff waren.

War Sauerstoff mit geringer Reinheit gewünscht, so wurde dieser in einem Regeneratorenpaar Luft/Sauerstoff und der unreine Stickstoff in einem zweiten Regeneratorenpaar Luft/unreiner Stickstoff abgekühlt bzw. angewärmt. War Sauerstoff mit höheren Reinheit gefragt, so wurden in die Speichermassen der Regeneratoren Rohrbündel, durch welche der Sauerstoff konstant abgezogen werden konnte, eingebettet.

Durch den indirekten Wärmetausch zwischen der zu zerlegenden Luft und dem unreinen Stickstoff sowie Sauerstoff entstanden große Temperaturdifferenzen zwischen einströmender Luft und ausströmenden Produkten; dies galt insbesondere für den ausströmenden Sauerstoff. Die dadurch entstandenen Kälteverluste konnten nur durch die Vergrößerung der Luftmenge, die in sog. Expansionsturbinen entspannt wurde, kompensiert werden. Diese großen Turbinenluftmengen, die direkt in die Niederdruckkolonne eingeblasen wurden, hatten aber auch eine nicht unbedeutende Verschlechterung der Ausbeute und damit einen erhöhten Energiebedarf zur Folge.

Die bereits erwähnten Wärmespeichermassen in den Regeneratoren mit Rohrspiralen für reinen Sauerstoff bestanden aus Quarzit-Steinen, für Sauerstoff geringerer Reinheit aus sog. Aluminium-Horden; dies sind spiralförmig aufgewickelte, geriffelte Aluminiumbänder. Regeneratoren mit Quarzitfüllung und Rohrspiralen haben ein nicht unbedeutendes Leervolumen, weshalb die in ihnen gespeicherte Druckluft bei jedem Schaltvorgang teilweise verloren geht, was zu einer Verschlechterung der Ausbeute führt.

In den 60er Jahren beganne Platten-Wärmetauscher und damit auch die sog. REVEX-Wärmetauscher (Reversing-Heat-Exchanger) die Regeneratoren zu verdrängen. Auch die Entwicklung von Molekularsieben, mittels derer Wasser und Kohlendioxid bei Umgebungstemperatur aus der Luft entfernt werden kann, trug dazu bei, daß die Regeneratoren verdrängt wurden. Zudem wurde zunehmend auch der in der Tieftemperaturzerlegung gewonnene Stickstoff neben dem Sauerstoff als Produkt angesehen. Eine Produktmenge Sauerstoff plus Stickstoff ist in sog. REVEX-Anlagen nur bis 50 % und bei der Verwendung von Regeneratoren nur bis ca. 45 % der eingesetzten Luftmenge realisierbar.

Bei großen Sauerstoffmengen, wie z. B. 100.000 Nm³/h Sauerstoff, müssen annähernd 500.000 Nm³/h Luft der Tieftemperaturzerlegung zugeführt werden. Davon sind 400.000 Nm³/h Restgas, also unreiner Stickstoff, der nicht getrocknet werden muß und zudem Kohlendioxid enthalten darf. Es ist deshalb nicht notwendig, die gesamte zu zerlegende Luft in entsprechenden (Molsieb)Adsorberstationen zu trocken und von Kohlendioxid zu befreien. Dies würde zudem eine beträchtliche Anzahl von der Adsorberstation nachgeschalteten, parallel angeordneten Plattenwärmetauschem erfordern.

Zur Lösung dieses Problems ist aus der DE 27 34 934 A1 ein Verfahren sowie eine Vorrichtung zur Tieftemperaturzerlegung von Luft bekannt, wobei in mindestens einem umschaltbaren Regeneratorenpaar ein Teil der zu zerlegenden Luft durch Wärmetausch mit einem Teil der Zerlegungsprodukte gekühlt wird, während der restliche Teil der zu zerlegenden Luft durch Adsorption gereinigt und in einem Wärmetauscher durch Wärmetausch mit einem anderen Teil der Zerlegungsprodukte gekühlt wird. Anschließend werden beide Luftströme der Tieftemperaturzerlegung zugeführt. Es kann somit eine Verfahrensweise realisiert werden, bei der nur derjenige Anteil der zu zerlegenden Luft adsorptiv von Wasser und Kohlendioxid befreit wird, der für die Anwärmung der z. B. 100.000 Nm³/h Produktsauerstoff erforderlich ist.

Nachteilig bei dem Verfahren sowie der Vorrichtung gemäß der DE 27 34 934 A1 ist jedoch, daß für die Kondensation von Wasser eine große Wärmespeicherkapazität vorhanden sein muß. Diese Forderung verursacht einerseits höhere Investitionskosten und führt andererseits dazu, daß insbesondere wegen des größeren Regeneratorvolumens auch höhere Luftschaltverluste in Kauf genommen werden müssen. Dies beeinflußt den Energiebedarf der Zerlegungsanlage nicht unbeträchtlich.

Aufgabe der vorliegenden Erfindung ist es, ein Verfahren sowie eine Vorrichtung zur Tieftemperaturzerlegung von Luft anzugeben, das bzw. die gegenüber den bekannten Verfahren und Vorrichtungen zur Tieftemperaturzerlegung von Luft eine Kosten- und Energiereduzierung ermöglicht.

Dies wird entsprechend dem erfindungsgemäßen Verfahren dadurch erreicht, daß die Abtrennung von Wasser aus dem durch das Regeneratorenpaar geführten Luftstrom vor dem Auskondensieren der Verunreinigungen adsorptiv und der Wärmetausch des durch die Regeneratoren geführten Luftstromes ausschließlich gegen einen unreinen Stickstoffstrom aus der Tieftemperaturzerlegung erfolgt.

Erfindungsgemäß erfolgt die Abtrennung von Wasser aus dem durch das Regeneratorenpaar geführten Luftstrom vor dem Auskondensieren der weiteren Verunreinigungen, wie z. B. Kohlendioxid, mittels Adsorption. Die erfindungsgemäße Vorrichtung ist deshalb dadurch gekennzeichnet, daß die Regeneratoren ein in ihrem Einlaßbereich angeordnetes Adsorptionsbett aufweisen.

Bei dem erfindungsgemäßen Verfahren erfolgt der Wärmetausch des durch die Regeneratoren geführten Luftstromes ausschließlich gegen einen unreinen Stickstoffstrom aus der Tieftemperaturzerlegung. Aufgrund dieser Verfahrensweise können die verwendeten Regeneratoren vergleichsweise einfach aufgebaut sein; zumindest kann auf das Vorsehen von Rohrbündeln in der Speichermasse der Regeneratoren verzichtet werden.

Das erfindungsgemäße Verfahren zur Tieftemperaturzerlegung von Luft weiterbildend wird vorgeschlagen, daß ein Teilstrom der zu zerlegenden Luft, der nicht den Regeneratoren zugeführt wird, mittels der Adsorption von Verunreinigungen befreit und anschließend im indirekten Wärmetausch mit einem anzuwärmenden Zerlegungsprodukt abgekühlt wird.

Diese Verfahrensweise macht es erforderlich, daß parallel zu den erwähnten Regeneratoren Adsorber, die geeignete Adsorptionsmittel enthalten, angeordnet werden. In diesen Adsorbern erfolgt ein Trocknen und Entfernen von Verunreinigen aus den Teilluftstrom, der anschließend vor seiner Zuführung in die Tieftemperaturzerlegung, vorzugsweise gegen den Produktsauerstoff, der dadurch angewärmt wird, abgekühlt wird.

Vorzugsweise werden wenigstens 50 bis 85 % der der Tieftemperaturzerlegung zugeführten Luftmenge durch die Regeneratoren geleitet. Da - wie eingangs bereits erwähnt - für die Produktion von 100.000 Nm³/h Produktsauerstoff annähernd 500.000 Nm³/h Luft der Tieftemperaturzerlegung zugeführt werden müssen, und dabei 400.000 Nm³/h Restgas - also unreiner Stickstoff entstehen -, hat diese Verfahrensweise den Vorteil, daß das gesamte Restgas für die Abkühlung des zu zerlegenden Luftstromes verwendet wird. Durch die Adsorber wird im wesentlichen nur derjenige Teilstrom der zu zerlegenden Luft geführt, der für die Anwärmung der Produktsauerstoffmenge und des Regeneriergases für die Adsorber benötigt wird.

Eine weitere vorteilhafte Ausgestaltung des erfindungsgemäßen Verfahrens zur Tieftemperaturzerlegung von Luft ist dadurch gekennzeichnet, daß die adsorptive Abtrennung von Wasser aus dem durch die Regeneratoren geführten Luftstrom in die Regeneratoren integriert ist.

Prinzipiell kann den Regeneratoren ein separater Adsorber, in dem die adsorptive Abtrennung von Wasser erfolgt, vorgeschaltet werden. In vorteilhafter Weise wird jedoch die für die adsorptive Abtrennung des Wassers benötigte Adsorptionsmittelschicht in den Regenerator selbst, vorzugsweise in dessen Einlaßbereich integriert. Mittels dieser Ausgestaltung der Erfindung kann die für die Entfernung von Wasser benötigte Menge an Adsorptionsmittel extrem klein gehalten werden, da sie nur für die kurze Luftperiode der Regeneratoren ausgelegt werden muß.

Das erfindungsgemäße Verfahren zur Tieftemperaturzerlegung von Luft weiterbildend wird vorgeschlagen, daß die Regenerierung des mit Wasser beladenen Adsorptionsmittels durch Spülen des Adsorptionsmittels erfolgt. Hierbei wird als Spülgas vorzugsweise ein unreiner Stickstoffstrom aus der Tieftemperaturzerlung verwendet.

Mit der zum Zwecke der Regenerierung durch den Regenerator geführten Spülgasmenge läßt sich eine sog. Heatless-Regenerierung der Adsorptionsmittelschicht realisieren.

Ist die Spülgasmenge - also die Menge an unreinem Stickstoff - annähernd gleich der in den Regeneratoren abzukühlenden Luftmenge, so ist es ausreichend, wenn im Einlaßbereich der Regeneratoren eine relativ kurze Adsorptionsmittelschicht, z. B. eine Alugelschicht, vorgesehen wird, mittels derer die Luft bspw. auf einen Taupunkt von 5°C abgekühlt wird. Dadurch wird gewährleistet, daß sich kein tropfförmiges Wasser auf den Horden oder Schüttungen der Regeneratoren bildet. Wird des weiteren die erwähnte Heatless-Regenerierung realisiert, führt dies dazu, daß die Regeneratoren noch kompakter bauen, da keine Heizflächen und Wärmekapazitäten für Wasserkondensation und Wiederverdampfung vorgesehen werden müssen.

Wie bereits erwähnt, zeichnet sich die erfindungsgemäße Vorrichtung zum Durchführen des erfindungsgemäßen Verfahrens dadurch aus, daß die Regeneratoren ein im Einlaßbereich angeordnetes Adsorptionsbett aufweisen. Dieses besteht entsprechend einer vorteilhaften Ausgestaltung der erfindungsgemäßen Vorrichtung aus einem Wasser-adsorbierenden Adsorptionsmittel. Entsprechend der Wahl des verwendeten Adsorptionsmittels kann dieses - neben Wasser - weitere Komponenten aus dem zu zerlegenden Luftstrom entfernen.

Es wird weiterhin vorgeschlagen, daß die Regeneratoren Stahlhorden und/oder eine Stahlschüttung als wärmespeicherndes Material enthalten. Diese Stahlhorden bzw. Stahlschüttungen - die anstelle von Aluminium-Horden oder Quarzit-Steinen Verwendung finden - führen zu wesentlich kompakteren Regeneratoren und damit zu geringeren Schaltverlusten. Zudem ist Stahl preiswerter als Aluminium. Prinzipiell können jedoch auch Aluminiumhorden und/oder Aluminiumschüttungen als wärmespeicherndes Material verwendet werden.

Die erfindungsgemäße Vorrichtung weiterbildend wird vorgeschlagen, daß die Stahl- oder Aluminiumhorden eine Breite von 30 bis 500 mm aufweisen.

## Patentansprüche

1. Verfahren zur Tieftemperaturzerlegung von Luft, bei dem in mindestens einem umschaltbaren Regeneratorenpaar ein Teilstrom oder der gesamte zu zerlegende Luftstrom durch Wärmetausch mit einem Teil der Zerlegungsprodukte gekühlt wird, wobei Verunreinigungen auskondensieren, wonach der so gereinigte Luftstrom der Tieftemperaturzerlegung zugeführt wird, **dadurch gekennzeichnet**, daß die Abtrennung von Wasser aus dem durch das Regeneratorenpaar geführten Luftstrom vor dem Auskondensieren der Verunreinigungen adsorptiv und der Wärmetausch des durch die Regeneratoren geführten Luftstromes ausschließlich gegen einen unreinen Stickstoffstrom aus der Tieftemperaturzerlegung erfolgt.

2. Verfahren zur Tieftemperaturzerlegung von Luft nach Anspruch 1, dadurch gekennzeichnet, daß ein Teilstrom der zu zerlegende Luft, der nicht den Regeneratoren zugeführt wird, adsorptiv von Verunreinigungen befreit und anschließend im indirekten Wärmetausch mit wenigstens einem anzuwärmenden Zerlegungsprodukt abgekühlt wird.

3. Verfahren zur Tieftemperaturzerlegung von Luft nach Anspruch 1 oder 2, dadurch gekennzeichnet, daß wenigstens 50 bis 85 % der der Tieftemperaturzerlegung zugeführten Luftmenge durch die Regeneratoren geführt wird.

4. Verfahren zur Tieftemperaturzerlegung von Luft nach einem der vorhergehenden Ansprüche, dadurch gekennzeichnet, daß die adsorptive Abtrennung von Wasser aus dem durch die Regeneratoren geführten Luftstromes in die Regeneratoren integriert ist.

5. Verfahren zur Tieftemperaturzerlegung von Luft nach einem der vorhergehenden Ansprüche, dadurch gekennzeichnet, daß die Regenerierung des mit Wasser beladenen Adsorptionsmittels durch Spülen des Adsorptionsmittels erfolgt.

6. Verfahren zur Tieftemperaturzerlegung von Luft nach Anspruch 5, dadurch gekennzeichnet, daß als Spülgas ein unreiner Stickstoffstrom aus der Tieftemperaturzerlegung verwendet wird.

7. Vorrichtung zum Durchführen des Verfahrens nach einem der vorhergehenden Ansprüche mit mindestens einem umschaltbaren Regeneratorenpaar, bei der die Lufteintrittsleitung mit den Regeneratoren verbunden ist, **dadurch gekennzeichnet**, daß die Regeneratoren ein im Einlaßbereich angeordnetes Adsorptionsbett aufweisen.

8. Vorrichtung nach Anspruch 7, dadurch gekennzeichnet, daß das Adsorptionsbett aus einem Wasser-adsorbierenden Adsorptionsmittel besteht.

9. Vorrichtung nach Anspruch 7 oder 8, dadurch gekennzeichnet, daß die Regeneratoren Stahlhorden und/oder eine Stahlschüttung als wärmespeicherndes Material enthalten.

10. Vorrichtung nach Anspruch 7 oder 8, dadurch gekennzeichnet, daß die Regeneratoren Aluminiumhorden und/oder eine Aluminiumschüttung als wärmespeicherndes Material enthalten.

11. Vorrichtung nach Anspruch 9 oder 10, dadurch gekennzeichnet, daß die Stahl- oder Aluminiumhorden eine Breite von 30 bis 500 mm aufweisen.

12. Vorrichtung nach einem der Ansprüche 7 bis 11, dadurch gekennzeichnet, daß zusätzlich zu dem mindestens einen umschaltbaren Regeneratorenpaar mindestens ein umschaltbares Adsorberpaar und ein Wärmetauscher angeordnet sind und eine Zweigleitung der Lufteintrittsleitung über die Adsorber mit dem Wärmetauscher verbunden ist.
